# EUROPEAN PATENT SPECIFICATION

(11) **EP 2 006 532 B1**
(45) Date of publication and mention of the grant of the patent: **20.01.2010**
(21) Application number: 08011224.6
(22) Date of filing: 20.06.2008
(51) Int. Cl.: F02N 15/00, F16H 57/02, H02K 5/00

(54) **Liquid resistant transmission housing**
Flüssigkeitsbeständiges Getriebegehäuse
Boîtier de transmission résistant aux liquides

(30) Priority: 20.06.2007 JP 2007162844
(43) Date of publication of application: 24.12.2008
(73) Proprietor: AISIN AI Co., Ltd., Nishio-shi, Aichi-ken (JP); Toyota Jidosha Kabushiki Kaisha, Toyota-shi, Aichi-ken 471-8571 (JP)
(72) Inventor: Yamada, Takafumi, Nishio-shi Aichi-ken (JP); Miyazaki, Takeshige, Nishio-shi Aichi-ken (JP); Kato, Junichi, Toyota-shi Aichi-ken, 471-8571 (JP); Suzuki, Michinobu, Toyota-shi Aichi-ken, 471-8571 (JP)
(74) Representative: Serjeants

(56) References cited:
- WO-A-88/06368
- DE-A1- 2 129 424
- GB-A- 2 239 563
- US-A- 4 978 875
- US-A- 5 010 265
- US-A- 5 053 633
- US-A- 5 943 909
- US-A1- 2002 023 686
- US-A1- 2002 103 051

## Description

### FIELD OF THE INVENTION

The present invention generally relates to a liquid resistant housing of a transmission which is actuated by an electric actuator.

### BACKGROUND

A transmission apparatus, which includes a plural sets of speed change gears for shifting a gear ratio in a transmission and a clutch portion adjusted to establish and interrupt a driving-force transmitting path between an engine and the transmission and which performs a shifting operation by means of an actuator, has been proposed as one of transmissions for a vehicle. A hydraulic actuator and an electric actuator have been mainly employed as the actuator, and more particularly, a motor and a solenoid have been employed for the electric actuator, for example. A controlling apparatus for an actuator is disclosed in JP2002-221240A (hereinafter, referred to as reference 1). The controlling apparatus for the actuator disclosed in the reference 1 is one of examples of an electrically-driven type automated transmission, which includes an electric motor and an electric controller. In such automated transmission, a gearbox, which accommodates therein multiple sets of speed change gears, and an electric operation chamber, which accommodates therein an electric actuator, are generally separated from one another. Further, generally, lubricant for lubricating the speed change gears is accumulated in the gearbox in a liquid-tight manner and a breathing apparatus is provided at an upper portion of the gearbox. On the other hand, in the electric operation chamber, the electric actuator, of which oil resistance is not ensured, is set apart from the lubricant. At the same time, water resistance measures are generally employed so that the electric actuator may be resistant to moisture absorption and dew condensation, which are caused by a change of temperature and humidity, and resistant to water when the vehicle drives on a flooded road surface, for example.

As one of the water resistant measures for the electric operation chamber, sealing the electric operation chamber has been proposed. However, in a case where negative pressure is generated in the electric operation chamber because of the change of the temperature, for example, and once liquid enters into the electric operation chamber, liquid is difficult to remove therefrom. Accordingly, a liquid draining hole is generally provided at a bottom surface of the electric operation chamber so as to drain the entered liquid therein. Further, a structure, in which a draining tube is provided at the liquid draining hole so that liquid is drained to a position where liquid may not be an interference and in which liquid is almost prevented from entering into the electric operation chamber, has been employed. A waterproof structure of an electric rotating machine is disclosed in JP09-172750A (hereinafter referred to as reference 2). The waterproof structure disclosed in the reference 2 is provided with breathing holes corresponding to the liquid draining hole and further provided with a waterproof filter. The waterproof filter is water repellent and breathable. Therefore, liquid such as water is prevented from entering into the waterproof structure, and further, gases such as air and vapor are allowed to pass through the waterproof filter, thus leading to enhance a waterproof performance of the waterproof structure.

Further, in a consideration of a case where a vehicle is driven on a flooded road surface, a structure in which an air chamber is provided at a lower side of an electric operation chamber and communicates with a lower portion thereof, has been also employed. Accordingly, even when water enters into the air chamber, an internal pressure in the air chamber and the electric operation chamber is increased and water is prevented from entering into the electric operation chamber.

However, the waterproof filter equipped to the waterproof structure disclosed in the reference 2 is a special and expensive component, which may cause an increase of a cost of a transmission for a vehicle. On the other hand, in a structure where the draining tube is provided as disclosed in the reference 1, a route (space) for locating the draining tube is required. Accordingly, a design of the structure may be restricted. In addition, a material cost for a tube member and a fixing member and additional man-hour may be required. The structure, where the air chamber is provided, is comparatively uncomplicated and is effective for limiting a water level when water (liquid) statically enters into the air chamber. However, in a case where water enters into the air chamber dynamically, i.e., water enters into the air chamber because of a jet flow and/or a splash, there is a possibility that water may enter into even the electric operation chamber.

A need thus exists for a liquid resistant structure of a transmission, a liquid resistant structure of which drainage is maintained to be effective as known art and which may not cause an increase of a cost due to an increase of the number of components and further of which water resistance is improved.

US 5 053 633 discloses the preamble of claim 1.

### SUMMARY OF THE INVENTION

The invention provides a transmission housing having the features of claim 1 herein. Any liquid directed as a spray towards the opening at the bottom of the third chamber is turned back on itself and deflected back to the ambient surroundings outside of the third chamber.

According to the invention the liquid resistance of the transmission housing , and of the third chamber which accommodates the electric actuating means, may be improved. The transmission housing still incorporates a drainage hole for draining liquid such as condensed water to the ambient surroundings, but is far more resistant to liquid dynamically entering into the housing through the drain hole, for example because of a jet flow and/or a splash.

Further due to the above described structure, the first chamber and the second chamber are separated in the housing by means of a separator member, for example. In the first chamber, components of the speed changing portion such as an input shaft, an output shaft, a plurality of speed change gears, operational members for selectively engaging the speed change gears, and lubricant may be provided, for example. In addition, a clutch portion, which establishes and interrupts a driving-force transmitting path between an engine and the transmission, may be accommodated in the first chamber. Alternatively, the clutch portion may be provided separately from the first chamber. On the other hand, the electric operating portion for actuating the speed changing portion and/or the clutch portion is included in the second chamber. The electric operation portion may be a motor or a solenoid, both which are electric members for generating the driving-force. Still in addition, a mechanical member penetrating the separator member and a sealing member, such as a packing, for maintaining an air resistance of the separator member, may be employed so as to transmit the driving-force to the transmission.

A bottom portion of the second chamber may be provided with a draining hole for draining any liquid such as water which has entered into the second chamber. The draining hole communicates with the third chamber. A lower portion of the third chamber is provided with the opening portion opened to the ambient surroundings. A capacity of the second chamber may be ensured enough large but so as not to interfere with a size of the transmission. In addition, a space of the opening portion of the third chamber may be decided so that drainage of liquid is not interfered with. Further, other portions of the third chamber are structured in a closed and tight manner so as to prevent liquid from entering into the third chamber. Still further, the liquid flow changing portion exhibiting a curved recess is provided at an outer side of the opening portion so as to prevent liquid from flowing into the third chamber in a straight manner through the opening portion and so as to return liquid reached the curved recess to the outside of the third chamber. A form of the liquid flow changing portion may be structured in a pouch-like shape, for example, so that the liquid reached at the curved recess flows along the liquid flow changing portion and returns crossing a side of the opening portion of the third chamber.

Still further according to an aspect of the present invention, the liquid flow changing portion is formed to be integral with a member structuring the housing. For example, the liquid flow changing portion, exhibiting the curved recess in the pouch-like shape, may be formed at a side plate configuring the housing. Alternatively, the liquid flow changing portion may be formed at a bottom plate configuring the housing by changing a form of the bottom plate. By forming the liquid flow changing portion at the side plate and/or the bottom plate so as to be integral with the housing, a number of the components of the liquid resistant structure of the transmission may be the same as the known liquid resistant structure. In addition, the liquid flow changing portion exhibits the curved recess. Accordingly, the liquid flow changing portion may be produced by a vertical casting process or a pressing process with known general equipment. Accordingly, manufacturing cost may hardly increase.

Still further due to the above described structure, the drainage of the liquid resistant structure may be obtained as same as the known liquid resistant structure even when water is produced in the second chamber by dew condensation due to a combination of a respiratory effect and a temperature change, for example. That is because the water is drained from the draining hole to the outside of the housing via the third chamber and the opening portion thereof. In addition, in a case where water (liquid) statically enters into the third chamber because of a case where the transmission is submerged in water (liquid), for example, water enters into the lower portion of the third chamber. In such a case, air in an upper space of the third chamber and in the second chamber communicating with the third chamber is closed in a tight manner. Therefore, the air is compressed and an inner pressure of the second and third chambers is increased. Accordingly, an entering amount of water (liquid) into the third chamber is limited hence water (liquid) may not reach the second chamber. An operation relative to the case where water (liquid) statically enters into the third chamber is also as same as the known liquid resistant structure.

Still further due to the above described structure, in a case where liquid dynamically enters into the housing, for example in a case where liquid reaches the transmission from an outside thereof due to the jet flow and/or the splash because a vehicle is driven on a flooded road surface, the liquid flow changing portion prevents, or interferes, liquid from entering into the third chamber in a straight manner. In addition, a flowing direction of liquid is changed gradually along the curved recess of the liquid flow changing portion and is returned to the outside of the transmission. Accordingly, the liquid resistance may be highly obtained. Even in a case where a slight amount of liquid enters into the third chamber, force of liquid may be weak and liquid may not enter into the second chamber, which is located at an upper side of the third chamber and accommodates the electric actuating portion.

On the other hand, according to the known liquid resistant structure, liquid entering into the third chamber from the opening portion may not be prevented and therefore, there is a possibility that liquid may enter into the second chamber because of the force of the liquid and/or a splash of liquid impacted at an inner wall of the third chamber. However, according to the aspect of the present invention, the water resistance relative to the case where liquid dynamically enters into the third chamber by the jet flow and/or the splash may be largely improved.

According to the liquid resistant structure described above, liquid entering into the third chamber may be prevented by the liquid flow changing portion. Therefore, the water resistance relative to the case where liquid dynamically enters into the third chamber by the jet flow and/or the splash may be largely improved. In addition, the liquid flow changing portion is formed to be integral with the member structuring the housing. Accordingly, a number of the components of the liquid resistant structure may be the same as the known liquid resistant structure, and the manufacturing cost may hardly increase because the liquid resistant structure of the above described structure can be manufactured with the known general equipment.

### BRIEF DESCRIPTION OF THE DRAWINGS

The foregoing and additional features and characteristics of the present invention will become more apparent from the following detailed description considered with reference to the accompanying drawings, wherein:

Fig. 1 is a cross sectional view schematically illustrating a liquid resistant transmission housing according to an embodiment of the present invention;

Fig. 2 is a cross sectional view schematically illustrating a liquid resistant transmission housing according to a known art;

Fig. 3 is a cross sectional view of the liquid resistant transmission housing of Fig. 1 illustrating a case where the water resistance structure is submerged in water;

Fig. 4A is a cross sectional view illustrating another liquid resistant transmission housing according to a modified embodiment of the present invention; and

Fig. 4B is a plan view illustrating a bottom plate portion of the liquid resistant transmission housing of Fig. 4A, the bottom plate portion being seen from a direction of arrows IVa - IVB in Fig. 4A.

### DETAILED DESCRIPTION

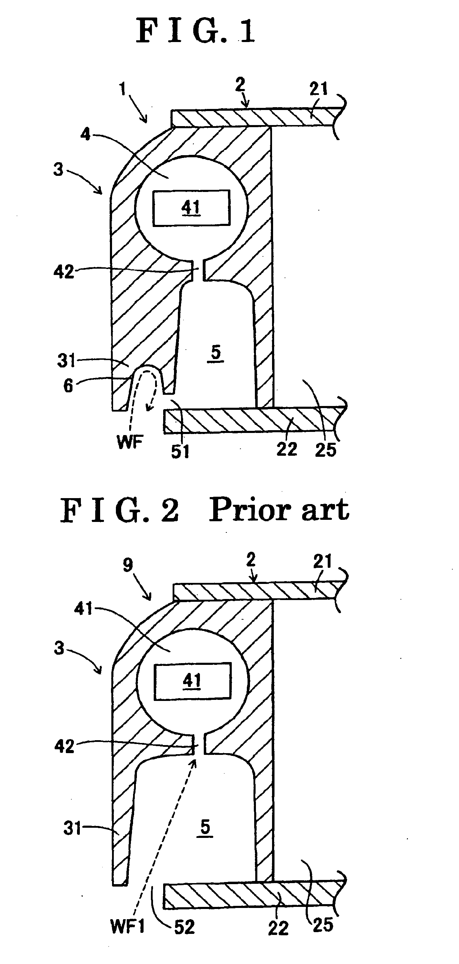

An embodiment of a liquid resistant structure of a transmission will be described hereinafter with reference to attached Figs. 1 to 3. Fig. 1 is a cross sectional view schematically illustrating the liquid resistant structure, generally indicated by reference numeral 1, of the transmission according to the embodiment. The liquid resistant structure 1 is configured with a housing 2, which is a transmission case, and an electric operation case 3. The electric operation case 3 includes an electric operation chamber 4, an air chamber 5 and a liquid flow changing portion 6.

The housing 2 is structured by a top plate portion 21, a bottom plate portion 22 (serving as a member structuring the housing 2) and a side plate portion which is not illustrated in the drawings. Further, the electric operation case 3 is employed also as a part of the side plate portion of the housing 2, hence a speed change gear chamber 25 (serving as a first chamber) is defined inside the housing 2. Components of a speed change gear portion (serving as a speed changing portion for changing speed ratio), such as an input shaft, an output shaft, a plurality of speed change gears, operational members for selectively engaging the speed change gears, and lubricant (all which are not illustrated in the drawings), are accommodated in the speed change gear chamber 25. In place of the plurality of speed change gears, pulleys and/or planetary gears, for example, may be accommodated in the first chamber as the speed changing portion for changing the speed ratio.

The electric operation case 3 is practically structured by associating plural components and as is apparent from Fig. 1, the electric operation chamber 4 (serving as a second chamber) is defined at an upper portion of the electric operation case 3. A motor 41, which serves as an electric actuating portion, is housed in the electric operation chamber 4. Alternatively, the electric actuating portion may include a solenoid. An output shaft of the motor 41 is connected to the speed change gear portion by means of a transmission shaft (not illustrated) so as to perform a speed change operation. Further, a draining hole 42 is formed at a bottom portion of the electric operation chamber 4 and extends downwardly as illustrated in Fig. 1. Additionally, a clutch actuating portion (not illustrated) for actuating a clutch portion (not illustrated), which establishes and interrupts a driving-force transmitting path between an engine (not illustrated) and the transmission, may be included in the liquid resistant structure 1. Further, the clutch portion may be accommodated in the speed change gear chamber 25 and the clutch actuating portion may be accommodated in the electric operation chamber 4. Still further, the clutch portion and the clutch actuating portion may be provided separately from the speed change gear chamber 25 and the motor 41, respectively.

On the other hand, a lower portion of the electric operation case 3 is formed with a space communicating with the draining hole 42. The space is formed at a position being lower than the draining hole 42 (i.e., a lower side of the electric operation chamber 4), and a lower portion of the space is open to ambient. Further, the lower portion of the space is covered with the bottom plate portion 22 of the housing 2. Thus, the air chamber 5 (serving as a third chamber), which communicates with the electric operation chamber 4, is defined. A part of a bottom portion of the air chamber 5, i.e., a left bottom portion of the air chamber 5 in Fig. 1, is formed with an opening portion 51, which opens to communicate with an outer ambience, i.e., outer side of the electric operation case 3. Accordingly, the electric operation chamber 4 communicates with the outside of the electric operation case 3 via the draining hole 42, the air chamber 5 and the opening portion 51. Other portions of the electric operation case 3 are structured in a closed and tight manner.

With reference to Fig. 1, the liquid flow changing portion 6 is formed at a left lower portion of the side plate member 31 structuring the electric operation case 3. As is illustrated in the drawing, the liquid flow changing portion 6 is formed to exhibit a curved recess, i.e., to have a cross section of a smoothly curved recessed inner surface, so as to return the liquid reached the curved recess to the outside of the air chamber 5. More specifically, when viewed from a cross section, the liquid flow changing portion 6 is recessed upwardly at an outside upper portion of the opening portion 51 and is gradually curved towards outer side of the electric operation case 3 (i.e., a left portion of the electric operation case 3 in Fig. 1) and directed downwardly. In other words, the liquid flow changing portion 6 is structured so that its lower portion is opened to the outside of the electric operation case 3 and an upper portion is closed in a pouch-like shape. Further, with reference to Fig. 1, the opening portion 51 is provided, or opened, at a right and vertically intermediate portion of the pouch-like shaped recessed portion of the liquid flow changing portion 6. In other words, the liquid flow changing portion 6 is provided at a vicinity of the opening portion 51 of the air chamber 5.

Next, an operation of the liquid resistant structure 1 structured as described above will be described hereinafter according to the embodiment. Firstly, a water (liquid) draining operation is performed in the same manner as in the known arts. In other words, even when water is produced in the electric operation chamber 4 because of dew condensation due to a combination of a respiratory effect and a temperature change, for example, the water is drained from the draining hole 42 to the outside of the electric operation case 3 via the air chamber 5 and the opening portion 51.

Then, a water (liquid) resistant operation in a case where water (liquid) tends to enter the air chamber 5 dynamically will be described. Herein, the water resistant operation will be described with respect to a case where the vehicle is driven on a flooded road surface and therefore water (liquid), flown by a jet flow and/or a splash, reaches the transmission as a spray and is led to the opening portion 51, for example. When water flow WF, which is splashed up from the lower side of the electric operation case 3, is directed as a spray towards the opening portion 51 (opening) and reaches, or strikes, the curved recess of the liquid flow changing portion 6, the water flow WF flows along the liquid flow changing portion 6 as indicated with a dashed arrow in Fig. 1. Then, the water flow WF is guided to gradually change its flowing direction and naturally turns to the outside of the electric operation case 3. Thus, the water flow WF striking the baffle surface 6 is deflected by the baffle surface 6 and hardly enters into the air chamber 5. Even in a case where a slight amount of water (liquid) enters into the air chamber 5, a straight splash of water is interrupted, i.e., water may not flow in the air chamber 5 in a straight manner. Therefore, water does not splash into, or regurgitate into, the electric operation chamber 4 through the draining hole 42, both of which are located at the upper portion of the electric operation case 3, due to force of the water flow WF. Additionally, as illustrated in Fig. 1, the angular extent of the curve (the curved recess) of the baffle surface 6 is sufficient to deflect the liquid striking it as a spray back on itself through substantially 180°

On the other hand, according to a known liquid resistant structure illustrated in Fig. 2, there has been a possibility that water flow WF1 may reach the electric operation chamber 4. Fig. 2 is a cross sectional view schematically illustrating a known liquid resistant structure 9 for a transmission. Components, of the known liquid resistant structure 9 in Fig. 2, possessing the same general configuration as the corresponding components of the liquid resistant structure illustrated in Fig. 1 will be respectively indicated by the same reference numerals. As illustrated therein, an opening portion 52 is opened to the lower portion of the air chamber 5. However, according to the known liquid resistant structure 9, the air chamber 5 is not provided with a liquid flow changing portion. Accordingly, the water flow WF1 jetted from the lower side of the electric operation case 3 advances in a straight manner in the air chamber 5 as indicated with a dashed arrow in Fig. 2 and reaches the draining hole 42. Therefore, there is a possibility that the water flows into, or regurgitates into, the electric operation chamber 4 due to force of the water flow WF1. Accordingly, the liquid resistant structure 1 according to the embodiment of the present invention, water (liquid) resistance relative to a case where water dynamically enters into the air chamber 5 may be largely improved in comparison with the known liquid resistant structure 9 illustrated in Fig. 2.

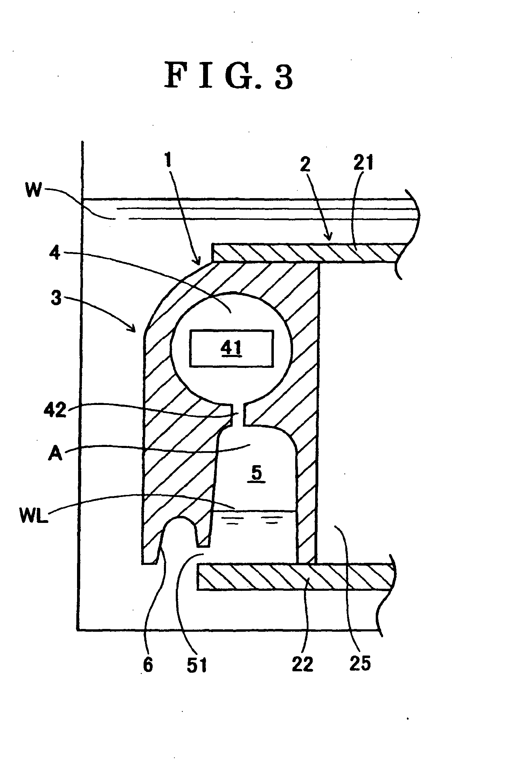

Next, a water resistant operation in a case where water (liquid) statically enters into the air chamber 5 will be described hereinafter with reference to Fig. 3. Fig. 3 is a cross sectional view of the liquid resistant structure 1 of the transmission illustrating a case where the water resistance structure is submerged in water W. As an extreme example of the case where water (liquid) statically enters into the air chamber 5, when the liquid resistant structure 1 is submerged in the water W, the water W enters into the lower portion of the air chamber 5 regardless of existence or nonexistence of the liquid flow changing portion 6. In such time, air A in an upper space of the air chamber 5 and in the electric operation chamber 4 communicating with the air chamber 5 is closed in a tight manner. Therefore, the air A is compressed until pneumatic pressure in the air chamber 5 and the electric operation chamber 4 is balanced with water pressure. However, a water level WL in the air chamber 5 is not extremely increased. Accordingly, an entering amount of water (liquid) is limited hence water (liquid) may not reach the electric operation chamber 4.

According to the embodiment described above, the speed change gear chamber 25 and the electric operation chamber 4 are separately included in the housing 2. In such a case, the air chamber 5 may be also included in the housing 2 and the liquid flow changing portion 6 may be formed at the housing 2. In addition, the liquid flow changing portion 6 formed at the side plate member 31 of the electric operation case 3 has the smoothly curved recessed form. Therefore, the liquid flow changing portion 6 can be manufactured by a vertical casting process or a pressing process. Accordingly, as long as a manufacturing die is newly prepared, the liquid resistant structure may be quantitatively produced with known general equipment. That results in preventing the number of the components from increasing and further, manufacturing cost may hardly increase.

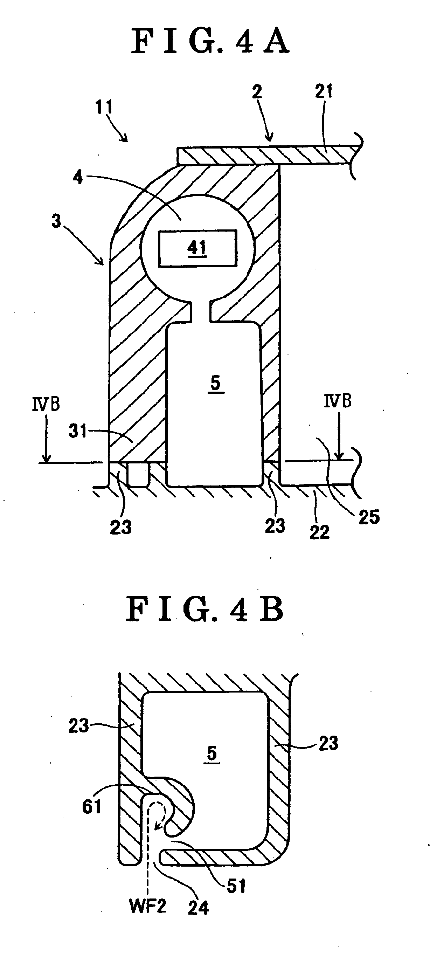

A modified embodiment of the present invention will be described hereinafter with reference to Fig. 4. Figs. 4A and 4B are explanatory views respectively illustrating a liquid resistant structure 11 according to the modified embodiment, a liquid resistant structure 11 in which the bottom plate portion 22 of the housing 2 is formed with a liquid flow changing portion 61. Fig. 4A is a cross sectional view of the liquid resistant structure 11 of the transmission, and Fig. 4B is a plan view of the bottom plate portion 22 seen from a direction of arrows IVB - IVB in Fig. 4A. Components possessing the same general configuration as the corresponding components of the liquid resistant structure illustrated in Fig. 1 will be respectively indicated by the same reference numerals. The liquid resistant structure 11 according to the modified embodiment includes the liquid flow changing portion 61 relative to water flow WF2, which tends to enter into the air chamber 5 in a parallel direction. More specifically, an upper surface of the base plate portion 22 of the housing 2 is formed with a frame shaped protruding portion 23, which is partially opened. The protrusion 23 is connected to the side plate member 31 of the electric operation case 3, thus forming the air chamber 5. In other words, as will be apparent from Fig. 4B, the protruding portion 23 is structured to be a closed frame shape, or to form a closed chamber, having an opening, i.e., a part of the protrusion 23 is opened, or cut out, for draining water. The opening of the protrusion 23 serves as an entrance 24 from which the water flow WF2 enters into the air chamber 5. As best shown in Fig. 4B, the liquid flow changing portion 61, which has a smoothly curved recessed form, is provided in the air chamber 5 and in front of the entrance 24, i.e., at the vicinity of the entrance 24 so as to face the water flow WF2. The liquid flow changing portion 61 is formed at the upper surface of the bottom plate member 22 so as to protrude therefrom. With reference to Fig. 4B, a space between a right end portion of the liquid flow changing portion 61 and the protrusion 23 is slightly opened and an opening portion 51 is formed so that the opening portion 51 communicates with the air chamber 5.

According to the modified embodiment illustrated in Figs. 4A and 4B, drainage and effects relative to the case where water (liquid) statically enters into the air chamber 5 will be obtained in the same manner as the embodiment illustrated in Fig. 1. Further, effects in a case where water (liquid) dynamically enters into the air chamber 5 will be approximately the same as the embodiment illustrated in Fig. 1. The water flow FW2 in the parallel direction flows along the liquid flow changing portion 61 and therefore, the water flow WF2 will hardly enter into the air chamber 5 and returns to the outside of the electric operation case 3. Even in a case where a slight amount of water enters into the air chamber 5, the force of the water flow will be weak and may not enter, or regurgitate, into the electric operation chamber 4 which is located at the upper portion of the electric operation case 3.

The liquid resistant structure 1 (11) described above may be applied to any transmission employing the electric actuator (motor and/or solenoid), such as an automated manual transmission (AMT), an automatic transmission (AT), continuously variable transmission (CVT), a hybrid transmission, or the like.

## Claims

1. A transmission housing (2) comprising
a first chamber (25) accommodating a speed changing transmission,
a second chamber (4) accommodating an electric actuating means (41) for actuating the speed changing transmission, and
a third chamber (5) provided below the second chamber (4) and communicating with the second chamber (4), the third chamber (5) including an opening (51) at a bottom thereof, opening to ambient surroundings,
**CHARACTERISED IN THAT** a baffle surface (6,61) is formed by a portion of a wall of the transmission housing (2) and is positioned at or adjacent to the opening (51) and is positioned so that any liquid directed as a spray towards the opening (51) and striking the baffle surface is deflected by the baffle surface (6,61) and returned to the ambient surroundings.

2. A transmission housing according to claim 1, wherein the baffle surface (6,61) is curved.

3. A transmission housing according to claim 2, wherein the angular extent of the curve of the baffle surface (6,61) is sufficient to deflect liquid striking it as a spray back on itself through 180°.

4. A transmission housing according to any preceding claim, wherein the electric actuating means (41) accommodated in the second chamber (4) includes a motor.

5. A transmission housing according to any of claims 1 tto 3, wherein the electric actuating means (41) accommodated in the second chamber (4) includes a solenoid.

6. A transmission housing according to any preceding claim, wherein the speed changing transmission accommodated in the first chamber (25) includes a clutch portion for establishing and interrupting a driving-force transmitting path between an engine and the transmission.

7. A transmission housing according to claim 6, wherein the electric actuating means (41) accommodated in the second chamber (4) includes means for actuating the clutch portion accommodated in the first chamber (25).

8. A transmission housing according to any preceding claim, wherein the baffle surface (61) is an integral surface of a member (22) forming a base plate of the housing (2).

## Patentansprüche

1. Getriebegehäuse (2), enthaltend
eine erste Kammer (25); die ein Gangschaltgetriebe aufnimmt,
eine zweite Kammer (4), die ein elektrisches Betätigungsmittel (41) zum Betätigen des Gangschaltgetriebes aufnimmt, und
eine dritte Kammer (5), die unter der zweiten Kammer (4) vorgesehen ist und mit der zweiten Kammer (4) in Verbindung steht, wobei die dritte Kammer (5) eine Öffnung (51) an einem Boden von ihr aufweist, die sich zur Umgebung öffnet,
**dadurch gekennzeichnet, dass**
eine Schaufeloberfläche (6, 61) durch einen Bereich einer Wand des Getriebegehäuses (2) geformt ist und an oder nahe bei der Öffnung (51) positioniert ist und so positioniert ist, dass jede Flüssigkeit, die als ein Sprühnebel in Richtung der Öffnung (51) gerichtet ist und die Schaufeloberfläche trifft, durch die Schaufeloberfläche (6, 61) abgelenkt wird und zur Umgebung zurückgeführt wird.

2. Getriebegehäuse nach Anspruch 1, wobei die Schaufeloberfläche (6, 61) gekrümmt ist.

3. Getriebegehäuse nach Anspruch 2, wobei das Winkelausmaß der Krümmung der Schaufeloberfläche (6, 61) zum Ablenken von Flüssigkeit, die sie trifft, als ein Sprühnebel zurück auf sie selbst um 180° ausreichend ist.

4. Getriebegehäuse nach einem der vorhergehenden Ansprüche, wobei das elektrische Betätigungsmittel (41), das in der zweiten Kammer (4) untergebracht ist, einen Motor enthält.

5. Getriebegehäuse nach einem der Ansprüche 1 bis 3, wobei das elektrische Betätigungsmittel (41), das in der zweiten Kammer (4) untergebracht ist, ein Solenoid enthält.

6. Getriebegehäuse nach einem der vorhergehenden Ansprüche, wobei das Gangschaltgetriebe, das in der ersten Kammer (25) untergebracht ist, einen Kupplungsbereich zum Herstellen und Unterbrechen eines Antriebsleistungsübertragungswegs zwischen einem Motor und dem Getriebe enthält.

7. Getriebegehäuse nach Anspruch 6, wobei das elektrische Betätigungsmittel (41), das in der zweiten Kammer (4) untergebracht ist, ein Mittel zum Betätigen des Kupplungsbereichs enthält, der in der ersten Kammer (25) untergebracht ist.

8. Getriebegehäuse nach einem der vorhergehenden Ansprüche, wobei die Schaufeloberfläche (61) eine integrale Oberfläche eines Elements (22) ist, das eine Basisplatte des Gehäuses (2) bildet.

## Revendications

1. Boîtier de transmission (2) comprenant :
une première chambre (25) recevant une transmission à changement de vitesses,
une seconde chambre (4) recevant un système d'actionnement électrique (41) pour actionner la transmission à changement de vitesses, et
une troisième chambre (5) ménagée sous la seconde chambre (4) et communiquant avec ladite seconde chambre (4), la troisième chambre (5) comprenant une ouverture (51) dans sa partie inférieure, ouvrant vers l'environnement ambiant,
**caractérisé en ce qu'**une surface de déflecteur (6, 61) est formée par une partie d'une paroi du logement de transmission (2) et est positionnée au niveau de ou près de l'ouverture (51) et est positionnée de sorte que n'importe quel liquide dirigé comme un spray vers l'ouverture (51) et heurtant la surface de déflecteur soit défléchi par la surface de déflecteur (6, 61) et renvoyé à l'environnement ambiant.

2. Boîtier de transmission selon la revendication 1, dans lequel la surface de déflecteur (6, 61) est incurvée.

3. Boîtier de transmission selon la revendication 2, dans lequel l'extension angulaire de la courbe de la surface de déflecteur (6, 61) est suffisante pour défléchir le liquide la heurtant comme un spray, qui retourne sur lui-même sur 180°.

4. Boîtier de transmission selon l'une quelconque des revendications précédentes, dans lequel le système d'actionnement électrique (41) situé dans la seconde chambre (4) comprend un moteur.

5. Boîtier de transmission selon l'une quelconque des revendications 1 à 3, dans lequel le système d'actionnement électrique (41) situé dans la seconde chambre (4) comprend un solénoïde.

6. Boîtier de transmission selon l'une quelconque des revendications précédentes, dans lequel la transmission à changement de vitesse située dans la première chambre (25) comprend une partie d'embrayage pour établir et interrompre un chemin de transmission de la force d'entraînement entre un moteur et la transmission.

7. Boîtier de transmission selon la revendication 6, dans lequel le système d'actionnement électrique (41) reçu dans la seconde chambre (4) comprend un système d'actionnement de la partie d'embrayage située dans la première chambre (25).

8. Boîtier de transmission selon l'une quelconque des revendications précédentes, dans lequel la surface de déflecteur (61) est une surface intégrale d'un élément (22) formant une plaque de base du boîtier (2).
